# EUROPÄISCHE PATENTSCHRIFT

(11) **EP 3 839 685 B1**
(45) Veröffentlichungstag und Bekanntmachung des Hinweises auf die Patenterteilung: **17.01.2024**
(21) Anmeldenummer: 20210339.6
(22) Anmeldetag: 27.11.2020
(51) Int. Cl.: G05D 1/00

(54) **VERFAHREN ZUM BETREIBEN EINES AUTOMATISIERTEN FLURFÖRDERZEUGS SOWIE INTRALOGISTISCHES SYSTEM ZUR DURCHFÜHRUNG DES VERFAHRENS**
METHOD FOR OPERATING AN AUTOMATED LIFTING TRUCK AND INTRALOGISTIC SYSTEM FOR CARRYING OUT THE METHOD
MÉTHODE D'EXPLOITATION D'UN CHARIOT ÉLÉVATEUR AUTOMATISÉ ET D'UN SYSTÈME INTRALOGISTIQUE POUR L'EXÉCUTION DE LA MÉTHODE

(30) Priorität: 18.12.2019 DE 102019134911
(43) Veröffentlichungstag der Anmeldung: 23.06.2021
(73) Patentinhaber: STILL GmbH, 22113 Hamburg (DE)
(72) Erfinder: Krüger-Basjmeleh, Tino, 25469 Halstenbek (DE); Wittmann, Thomas, 21035 Hamburg (DE); Viereck, Volker, 23898 Kühsen (DE)
(74) Vertreter: Patentship Patentanwaltgesellschaft

(56) Entgegenhaltungen:
- EP-A1- 3 511 884
- WO-A1-2016/203550
- CN-A- 109 612 480
- US-A1- 2018 011 491
- OldBenz: "Bosch and Daimler - Automated valet parking", Youtube, 23. Juli 2019 (2019-07-23), Seite 1 pp., XP054981537, Gefunden im Internet: URL:https://www.youtube.com/watch?v=dfnHGP Gv5AU [gefunden am 2021-03-15]
- AGILOX: "AGILOXsetupwithinminutes", Youtube, 20. Dezember 2018 (2018-12-20), Seite 1 pp., XP054981540, Gefunden im Internet: URL:https://www.youtube.com/watch?v=9iGGib HmpMc [gefunden am 2021-03-15]

## Beschreibung

Die Erfindung betrifft ein Verfahren zum Betreiben eines automatisierten Flurförderzeugs mit einer, eine Datenverarbeitungseinrichtung umfassenden, Steuerungseinrichtung zur automatischen Steuerung des Flurförderzeugs und einer mit der Datenverarbeitungseinrichtung in Wirkverbindung stehenden Datenaustauscheinrichtung, die mindestens eine Datenempfangseinrichtung umfasst.

Ferner betrifft die Erfindung ein intralogistisches System zur Durchführung des Verfahrens.

Aus der US 2018/011491 A1 ist ein Verfahren zum Laden und Liefern von Stängelunterbaugruppen und Garnspulen offenbart, das mindestens einen Prozessor, mindestens ein fahrerloses Transportfahrzeug, mindestens eine Spulengatteranordnung und eine automatisierte Spulengatterladeanordnung aufweisen.

Die WO 2016/203550 A1 offenbart ein Wegdatenerstellungssystem. Bewegungsdaten, die sich daraus ergeben, dass ein Bediener ein mobiles Endgerät entlang einer geplanten Bewegungsstrecke eines fahrerlosen Transportfahrzeugs bewegt, werden erfasst. Die erfassten Bewegungsdaten werden verwendet, um Wegdaten zu erzeugen, die einen Bewegungsweg für ein fahrerlose Transportfahrzeug angeben.

Die CN 109 612 480 A1 offenbart ein Verfahren zum Steuern eines fahrerlosen Transportfahrzeugs, bei dem ein getrennter Server mit einem mobilen Endgerät und dem fahrerlosen Transportfahrzeug in Kommunikationsverbindung steht.

Aus OldBenz: "Bosch and Daimler - Automated valet parking" , https://www.youtube.com/watch?v=dfnHGPGv5AU ist, ein automatisiertes Parksystem für Kraftfahrzeuge bekannt.

Aus AGILOX "AGILOXsetupwithinminutes" , https://www.youtube.com/watch?v=9iGGibHmpMc, ist ein automatisierter Hubwagen bekannt, der über ein Laptop eingerichtet werden kann.

Unter einem intralogistischen System versteht man ein System, bei dem logistische Material- und Warenflüsse innerhalb eines Betriebsgeländes und somit innerbetrieblich abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

In der Intralogistik werden in jüngster Zeit häufig autonome Flurförderzeuge verwendet. Autonome Flurförderzeuge gehören zu den fahrerlosen Transportfahrzeugen. Unter fahrerlosen Transportfahrzeugen (FTF, englisch: Automated Guided Vehicle, AGV) versteht man flurgebundene Förderfahrzeuge mit eigenem Fahrantrieb, die automatisch gesteuert und berührungslos geführt werden.

So sind bereits autonome Flurförderzeuge im Einsatz, die sich fahrerlos durch Lagerhallen bewegen und selbsttätig Positionen zum Aufnehmen und Abgeben von Waren ansteuern.

Teil eines intralogistischen Systems kann beispielsweise das Kommissionieren sein, also das Zusammenstellen von Warenlieferungen in einem Warenlager. Unter Kommissionierung versteht man alle Methoden zur Zusammenstellung von bestimmten Objekten, insbesondere von Gütern in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Handelsgüter von autonom betriebenen Transportfahrzeugen von einer Quellposition aufgenommen und auf einer auf dem Fahrzeug transportierten Zielpalette abgesetzt. Insbesondere werden hierzu mobile Kommissionierroboter verwendet, die die Handelsgüter selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann beispielsweise als Adhäsionsgreifer oder Vakuumgreifer ausgebildet sein.

Im Bereich der vollautomatisch fahrenden Flurförderzeuge werden heute Auftragsübermittlungen, das heißt neue Fahraufträge, mit Hilfe eines Staplerleitsystems, also einer Leitsteuerung, oder mit einer intelligenten fahrzeugzugehörigen Steuerung, beispielsweise ein integriertes Tablet, Bedienfeld etc., ausgeführt. Bei diesen automatischen Anlagen werden typischerweise die Folgeaufträge von einem überlagerten System dem Flurförderzeuge zugewiesen. Anwender können individuell die Aufträge an den automatisierten Flurförderzeugen quittieren, beispielsweise mittels eines Terminals, eines Schaltpults oder Ähnlichem, oder die Aufträge werden nach der Inbetriebnahme des Flurförderzeugs automatisch übernommen.

Neben den vollautomatischen Anlagen mit automatischer Auftragsgenerierung existieren Anlagen, bei denen Aufträge für Flurförderzeuge mit Hilfe eines vernetzten stationären Triggers in Form eines Schalters oder Ähnlichem ausgelöst werden. Dabei geht es um eine Auftragserzeugung am Ort des Bedarfes. Das häufigste Anwendungsgebiet ist dabei eine Zulieferung oder Abholung von Stückgut. Das Staplerleitsystem bekommt in diesem Fall eine Bedarfsanfrage über den Trigger vermittelt und erzeugt im nächsten Schritt einen Fahrauftrag.

Für das Warenmanagement in Warenlägern gibt es bereits Smartgräte in Form von Barcode-Lesegeräten zur Erfassung von Waren, dem Abarbeiten von Kommissionieraufträgen oder Ähnlichem.

Bei der Automatisierung von Bestandsanlagen sind die Aufwände und Risiken auf der Betreiber- und Herstellerseite sehr hoch. Einerseits muss die überlagerte Leitsteuerung integriert werden, um die Steuerung der automatisierten Flurförderzeuge zu übernehmen, und andererseits müssen die überlagerte Leitsteuerung mit vorhandenen Warenmanagementsystemen harmonieren, so dass Aufträge durchgängig im Warenlager erfasst werden. Dies erfordert für jeden Einsatz aufgrund divers vorinstallierter Softwareinfrastrukturen einen erheblichen Adaptionsaufwand auf der Anwenderseite.

Eine Individualisierung, letztlich die Gesamtmenge der Transportbedarfe, muss über alle technischen Schnittstellen abgebildet werden, was funktionale Risiken und finanzielle Aufwände mit sich bringt.

Der vorliegenden Erfindung liegt die Aufgabe zugrunde, ein Verfahren der eingangs genannten Art sowie ein intralogistisches System zur Durchführung des Verfahrens so auszugestalten, dass ein Einsatz automatisierter Flurförderzeuge auch ohne großen Investitionsaufwand in die betriebliche Infrastruktur des Einsatzortes ermöglicht wird.

Diese Aufgabe wird erfindungsgemäß verfahrensseitig dadurch gelöst, dass mittels mindestens eines von einer Betriebsperson tragbaren mobilen, als Smartgerät definierten, Elektronikgeräts mit integrierter Datenverarbeitungs-, Datensende- und Datenempfangseinrichtung sowie Informationsausgabe- und Eingabeeinrichtung Auftragsdaten für mindestens einen Auftrag für das Flurförderzeug über eine drahtlose Datenverbindung an die Datenempfangseinrichtung des Flurförderzeugs gesendet werden, wobei der Auftrag von einem Transportauftrag mit manuell am Smartgerät ausgewählter Transportzielvorgabe gebildet wird, und die Auftragsdaten an die Datenverarbeitungseinrichtung weitergegeben werden, in der die Auftragsdaten in ein Steuerungsprogramm eingelesen werden, das eine Abarbeitung des Auftrags durch das Flurförderzeug steuert.

Im Rahmen der vorliegenden Erfindung ist unter einem Smartgerät insbesondere ein elektronisches Gerät zu verstehen, das von Menschen mitgeführt werden kann. Gängige Beispiele von Smartgeräten sind Smartphones, Tablets, Smart Watches und Wearables. Diese Geräte besitzen heute schon die Möglichkeit, per Mobilfunk, WLAN oder Bluetooth mit anderen Systemen zu kommunizieren. Bisher wurden diese Geräte aber hauptsächlich im Bereich der Unterhaltungselektronik und in der Telekommunikation (insbesondere im Mobilfunkbereich) eingesetzt. Mit der Erfindung wird das an sich bekannte Prinzip der Smartgeräte auf die Anwendung in der Intralogistik übertragen.

Als Smartgerät kann beispielsweise ein Armbandgerät verwendet werden. Das Prinzip solcher Armbandgeräte ist an sich in Form so genannter Smart Watches aus der Consumerbranche bekannt.

Wesenspunkt der Erfindung ist die Übermittlung eines Auftrages, beispielsweise eines nachfolgenden Transportauftrages, zu einem individuellen automatisierten Flurförderzeug durch ein Smartgerät mit manuell an dem Smartgerät auswählbarer Zielvorgabe. Dadurch wird eine Entkopplung der betreiberseitigen Warenmanagementsysteme von den zur Steuerung der Flurförderzeuge notwendigen Leitsteuerungen ermöglicht, so dass diese unabhängig voneinander arbeiten können und damit aufwendige Adaptionen entfallen. Das Smartgerät zur Übermittlung des nachfolgenden Auftrags dient dabei als Koppelglied zwischen der Leitsteuerung, also der Fahrzeugbeauftragung, und dem Warenmanagementsystem.

Betriebspersonen, welche mit dem Warenverkehr und dem überlagerten Warenmanagementsystem vertraut sind, können mit dem oben genannten Smartgerät ausgestattet werden und hiermit Transportaufträge direkt an ein Flurförderzeug übermitteln. Diese Betriebspersonen dienen im intralogistischen System als Kopplungsschnittstelle und verbinden die Welten des Transportbedarfs, dem Warenmanagement bzw. dem Warenmanagementsystem, und der Leitsteuerung.

Hierzu kann das Smartgerät zweckmäßigerweise mit einer zentralen Datenverarbeitungseinrichtung eines Warenmanagementsystems und/oder eines Lagerverwaltungssystems über eine drahtlose Datenverbindung Daten austauschen. Die Betriebsperson kann also über das Smartgerät mit dem Warenmanagementsystem und/oder Lagerverwaltungssystem kommunizieren und entsprechende Aufträge an das Flurförderzeug weitergeben.

Dabei kann die Erfindung insbesondere in der Kommissionierung von Waren und dem anschließenden vollautomatischen Abtransport sowie der Ver- oder Entsorgung von Waren aus einem Zwischenlagerbereich, zum Beispiel Lastkraftwagen-Rampe, Produktionszwischenlager etc., zur Anwendung kommen.

Die Verwendung von Smartgeräten im Zusammenhang mit dem Betrieb von Flurförderzeugen ist zwar an sich bereits aus der EP 3 511 884 A1 bekannt. Dabei geht es allerdings lediglich darum, dem Flurförderzeug einzelne, voneinander unabhängige Steuerbefehle zu erteilen, beispielsweise, vorzufahren, anzuhalten oder zurückzufahren. Eine Übermittlung kompletter Aufträge, insbesondere Transportaufträge, durch das Smartgerät, die dann selbständig vom bordeigenen Steuerungsprogramm des Flurförderzeugs abgearbeitet werden, ist in diesem Stand der Technik nicht vorgesehen.

Vorzugsweise wird als drahtlose Datenverbindung eine radiobasierte Datenübertragung, insbesondere eine WLAN-(Wireless LAN)-, Bluetooth-, NFC-(Near Field Communication)-, UWB-(Ultra Wide Band)-, DECT- oder LoRaWAN- (Long Range Wide Area Network)- Verbindung verwendet, so dass die Betriebsperson Transportaufträge unmittelbar mittels Direktkommunikation an das Flurförderzeug übermitteln kann.

Die radiobasierte Datenübertragung wird vorzugsweise über eine Netzwerk-, insbesondere Internetverbindung, durchgeführt. Hierfür kann z.B. eine Breitbandverbindung über Mobilfunk oder WLAN verwendet werden. Durch die Einbindung des Smartgeräts in ein Netzwerk können mit unterschiedlichen Prozessteilnehmern an verschiedenen Orten Informationen ausgetauscht werden, so dass auch komplexe Betriebsabläufe koordiniert werden können.

Gemäß einer besonders bevorzugten Ausgestaltung der Erfindung ist vorgesehen, dass mittels eines Auswahlmenüs des Smartgeräts Aufträge für das Flurförderzeug auswählbar sind. Insbesondere kann das Smartgerät die Funktion besitzen, der Betriebsperson ein Auswahlmenü mit allen möglichen Transportzielen vollautomatischer Fahrzeuge anzubieten. Diese möglichen Transportziele sollten vorteilhafterweise sowohl den Fahrzeugen als auch dem Smartgerät zuvor bekannt sein. Die Betriebsperson kann durch eine gezielte Auswahl an dem Smartgerät ein Transportziel und somit den Transportauftrag anwählen und an das Fahrzeug übermitteln. Informationen zum Zielort des Transportes müssen zum Zeitpunkt des Transportbedarfs nur der Betriebsperson vorliegen.

Zweckmäßigerweise ist eine Auswahl von Aufträgen in der Datenverarbeitungseinrichtung der Steuerungseinrichtung des Flurförderzeugs und/oder im Smartgerät gespeichert.

In einer weiteren Ausgestaltung der Erfindung ist es möglich, keine Vorabinformationen zu sinnvollen Transportzielen auf dem Smartgerät vorzuhalten, sondern mögliche Transportziele in einem ersten Kommunikationsschritt mit dem konkreten Flurförderzeug, das beauftragt werden soll, von diesem zu erfragen. Somit können Transportziele fahrzeugtypspezifisch oder anwendungsspezifisch vergeben werden. Auch kann die Auftragsvergabe in Abhängigkeit der dem konkreten Flurförderzeug bereits zugeordneten nächsten Aufträge erfolgen, in dem auch die vorliegenden Aufträge mit dem ersten Datenaustausch zwischen Smartgerät und Flurförderzeug auf dem Smartgerät sichtbar und eventuell adaptierbar gemacht werden. Somit ist es auch ohne Wunsch zur Vergabe weiterer Aufträge möglich, mit dem Smartgerät den aktuellen Auftragszustand eines Flurförderzeugs abzufragen und diesen an dem Smartgerät zu visualisieren.

Hierzu ist gemäß einer Weiterbildung des Erfindungsgedankens vorgesehen, dass die Datenaustauscheinrichtung des Flurförderzeugs eine Datensendeeinrichtung umfasst, über die mittels des Smartgeräts die in der Datenverarbeitungseinrichtung der Steuerungseinrichtung des Flurförderzeugs gespeicherten und/oder verarbeiteten Aufträge abfragbar sind. Da also die Datenaustauscheinrichtung nicht nur über eine Datenempfangseinrichtung, sondern auch über eine Datensendeeinrichtung verfügt, ist eine bidirektionale Kommunikation zwischen dem Flurförderzeug und dem Smartgerät möglich. Somit kann die Betriebsperson nicht nur Aufträge mittels des Smartgeräts an das Flurförderzeug übermitteln, sondern auch den aktuellen Auftragszustand eines Flurförderzeugs und/oder Zustandsdaten vom Flurförderzeug abfragen.

Die Erfindung betrifft ferner ein intralogistisches System zur Durchführung des Verfahrens mit mindestens einem automatisierten Flurförderzeug mit einer, eine Datenverarbeitungseinrichtung umfassenden, Steuerungseinrichtung zur automatischen Steuerung des Flurförderzeugs und einer mit der Datenverarbeitungseinrichtung in Wirkverbindung stehenden Datenaustauscheinrichtung, die mindestens eine Datenempfangseinrichtung umfasst, und mit mindestens einem von einer Betriebsperson tragbaren mobilen, als Smartgerät definierten, Elektronikgerät mit integrierter Datenverarbeitungs-, Datensende- und Datenempfangseinrichtung sowie Informationsausgabe- und Eingabeeinrichtung.

Beim intralogistischen System wird die gestellte Aufgabe dadurch gelöst, dass das Smartgerät dazu eingerichtet ist, Auftragsdaten für mindestens einen Auftrag für das Flurförderzeug über eine drahtlose Datenverbindung an die Datenempfangseinrichtung des Flurförderzeugs zu senden, wobei der Auftrag von einem Transportauftrag mit manuell am Smartgerät ausgewählter Transportzielvorgabe gebildet ist, und die Datenverarbeitungseinrichtung des Flurförderzeugs dazu eingerichtet ist, die Auftragsdaten in ein Steuerungsprogramm einzulesen, das dafür programmiert ist, eine Abarbeitung des Auftrags durch das Flurförderzeug zu steuern.

Die Erfindung bietet eine ganze Reihe von Vorteilen:
Da mit der Erfindung die erforderlichen Investitionen in die Infrastruktur automatisierter intralogistischer Systeme erheblich reduziert werden können, kann die Markteinführung vollautomatisierter Systeme deutlich beschleunigt werden. Außerdem können individuelle Transportbedarfe optimal unterstützt werden, wobei eine softwaretechnische Abbildung in der Infrastruktur des intralogistischen Systems nicht notwendig ist. Es können große Softwaresysteme des intralogistischen Systems, wie die Leitsteuerung und das Warenmanagementsystem voneinander entkoppelt werden. Es wird sogar eine Nutzung vollautomatischer Fahrzeuge ohne Warenmanagementsystem ermöglicht.

Weitere Vorteile und Einzelheiten der Erfindung werden anhand des in der schematischen Figur dargestellten Ausführungsbeispiels näher erläutert. Hierbei zeigt die
- Figur: ein intralogistisches System mit Regallager, Flurförderzeug und Betriebsperson.

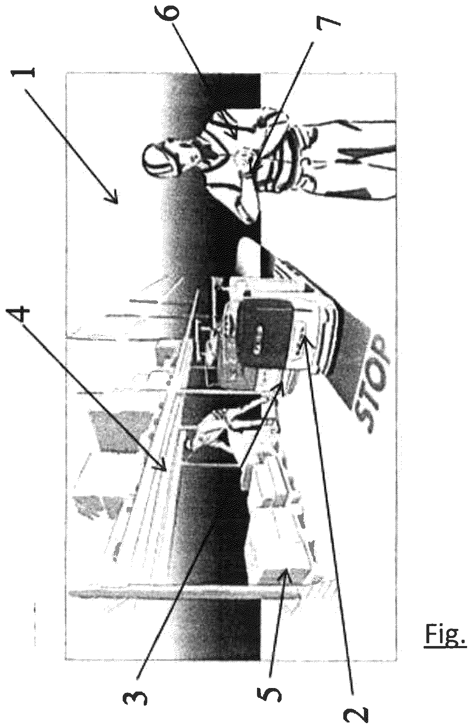

In der Figur ist intralogistisches System 1 mit Warenregalen 4 dargestellt. Als autonome Kommissionierer ausgebildete Flurförderzeuge 2 und 3 bewegen sich entsprechend vorprogrammierter Betriebsabläufe entlang der Warenregale 4, um Waren 5 an bestimmten Orten aufzunehmen oder abzugeben.

Die Betriebsperson 6 trägt ein Smartgerät 7, beispielsweise am Armgelenk ein als Armbandgerät ausgebildetes Smartgerät 7. Das Smartgerät 7 kann über eine drahtlose Datenverbindung, beispielsweise eine Direktverbindung mittels NFC, Bluetooth, DECT oder WLAN mit dem Flurförderzeug 2,3 Auftragsdaten für einen Auftrag, den das Flurförderzeug 2, 3 ausführen soll, austauschen. Die Flurförderzeuge 2, 3 und das Smartgerät 7 können somit miteinander kommunizieren.

Die Betriebsperson 6 kann über das Smartgerät 7 auf bequeme Art und Weise beispielsweise als Transportaufträge ausgebildete Aufträge an das Flurförderzeug 2 bzw. 3 erteilen.

Hierzu kann ein in der Figur nicht dargestelltes Lagerverwaltungssystem der Betriebsperson 6 per Netzwerkverbindung zum Smartgerät 7 mitteilen, welche Transportaufträge aktuell vorgesehen sind. Der Transportauftrag kann zum Beispiel darin bestehen, nach der Kommissionierung von Waren 5 aus dem Regal 4 diese Waren 5 mit dem Flurförderzeug 2 bzw. 3 an ein Transportziel vollautomatisch zu transportieren.

Das Smartgerät 7 kann die Funktion besitzen, der Betriebsperson 6 ein Auswahlmenü mit allen möglichen Transportzielen vollautomatischer Flurförderzeuge 2, 3 anzubieten. Diese möglichen Transportziele sind sowohl den Flurförderzeugen 2, 3 als auch dem Smartgerät 7 zuvor bekannt. Die Betriebsperson kann durch eine gezielte manuelle Auswahl an dem Smartgerät 7 ein Transportziel und somit den Transportauftrag anwählen und an das Flurförderzeug 2 bzw. 3 übermitteln. Informationen zum Zielort des Transportauftrages müssen zum Zeitpunkt des Transportbedarfs nur der Betriebsperson 6 vorliegen. Mit dem Smartgerät 7 wird es somit ermöglicht, den automatisierten Flurförderzeugen 2, 3 Aufträge, beispielsweise als Transportaufträge ausgebildete Folgeaufträge, zu übermitteln.

Dabei kann die Betriebsperson 6 mit den Flurförderzeugen 2 bzw. 3 per Smartgerät 7 Kontakt aufnehmen und den jeweiligen aktuellen Auftragsstatus der Flurförderzeuge 2 und 3 erfragen. Dabei kann die Betriebsperson 6 auch abfragen, ob der gewünschte Auftrag vom jeweiligen Flurförderzeug 2 oder 3 ausführbar ist, also zu der in der Steuerungseinrichtung des jeweiligen Flurförderzeugs 2 oder 3 abgespeicherten Auswahl an Aufträgen gehört. Somit können Transportziele fahrzeugtypspezifisch oder anwendungsspezifisch vergeben werden.

Auch kann die Auftragsvergabe in Abhängigkeit der dem konkreten Flurförderzeug 2 oder 3 bereits zugeordneten nächsten Aufträge erfolgen, in dem auch die vorliegenden Aufträge mit dem ersten Datenaustausch zwischen Smartgerät 7 und Flurförderzeug 2 oder 3 auf dem Smartgerät 7 sichtbar und adaptierbar gemacht werden. Somit ist es auch ohne Wunsch zur Vergabe weiterer Aufträge möglich, mit dem Smartgerät 7 den aktuellen Auftragszustand des Flurförderzeugs 2 oder 3 abzufragen und diesen dort zu visualisieren.

## Patentansprüche

1. Verfahren zum Betreiben eines automatisierten Flurförderzeugs (2, 3) mit einer, eine Datenverarbeitungseinrichtung umfassenden, Steuerungseinrichtung zur automatischen Steuerung des Flurförderzeugs (2, 3) und einer mit der Datenverarbeitungseinrichtung in Wirkverbindung stehenden Datenaustauscheinrichtung, die mindestens eine Datenempfangseinrichtung umfasst, **dadurch gekennzeichnet, dass** mittels mindestens eines von einer Betriebsperson (6) tragbaren mobilen, als Smartgerät (7) definierten, Elektronikgeräts mit integrierter Datenverarbeitungs-, Datensende- und Datenempfangseinrichtung sowie Informationsausgabe- und Eingabeeinrichtung Auftragsdaten für mindestens einen Auftrag für das Flurförderzeug (2, 3) über eine drahtlose Datenverbindung an die Datenempfangseinrichtung des Flurförderzeugs (2, 3) gesendet werden, wobei der Auftrag von einem Transportauftrag mit manuell am Smartgerät (7) ausgewählter Transportzielvorgabe gebildet wird, und die Auftragsdaten an die Datenverarbeitungseinrichtung weitergegeben werden, in der die Auftragsdaten in ein Steuerungsprogramm eingelesen werden, welches eine Abarbeitung des Auftrags durch das Flurförderzeug (2, 3) steuert.

2. Verfahren nach Anspruch 1, **dadurch gekennzeichnet, dass** das Smartgerät (7) mit einer zentralen Datenverarbeitungseinrichtung eines Warenmanagementsystems und/oder eines Lagerverwaltungssystems über eine drahtlose Datenverbindung Daten austauscht.

3. Verfahren nach Anspruch 1 oder 2, **dadurch gekennzeichnet, dass** als drahtlose Datenverbindung eine radiobasierte Datenübertragung, insbesondere eine WLAN-, Bluetooth-, NFC-, UWB-, DECT- oder LoRaWAN-Verbindung verwendet wird.

4. Verfahren nach Anspruch 3, **dadurch gekennzeichnet, dass** die radiobasierte Datenübertragung über eine Netzwerk-, insbesondere Internetverbindung, durchgeführt wird.

5. Verfahren nach einem der Ansprüche 1 bis 4, **dadurch gekennzeichnet, dass** mittels eines Auswahlmenüs des Smartgeräts (7) Aufträge für das Flurförderzeug (2, 3) auswählbar sind.

6. Verfahren nach Anspruch 5, **dadurch gekennzeichnet, dass** eine Auswahl von Aufträgen in der Datenverarbeitungseinrichtung der Steuerungseinrichtung des Flurförderzeugs (2, 3) und/oder im Smartgerät (7) gespeichert ist.

7. Verfahren nach einem der Ansprüche 1 bis 6, **dadurch gekennzeichnet, dass** die Datenaustauscheinrichtung des Flurförderzeugs (2, 3) eine Datensendeeinrichtung umfasst, über die mittels des Smartgeräts (7) die in der Datenverarbeitungseinrichtung der Steuerungseinrichtung des Flurförderzeugs (2, 3) gespeicherten und/oder verarbeiteten Aufträge abfragbar sind.

8. Intralogistisches System zur Durchführung des Verfahrens nach einem der Ansprüche 1 bis 7 mit mindestens einem automatisierten Flurförderzeug (2, 3) mit einer, eine Datenverarbeitungseinrichtung umfassenden, Steuerungseinrichtung zur automatischen Steuerung des Flurförderzeugs und einer mit der Datenverarbeitungseinrichtung in Wirkverbindung stehenden Datenaustauscheinrichtung, die mindestens eine Datenempfangseinrichtung umfasst, und mit mindestens einem von einer Betriebsperson tragbaren mobilen, als Smartgerät (7) definierten, Elektronikgerät mit integrierter Datenverarbeitungs-, Datensende- und Datenempfangseinrichtung sowie Informationsausgabe- und Eingabeeinrichtung, **dadurch gekennzeichnet, dass** das Smartgerät (7) dazu eingerichtet ist, Auftragsdaten für mindestens einen Auftrag für das Flurförderzeug (2, 3) über eine drahtlose Datenverbindung an die Datenempfangseinrichtung des Flurförderzeugs (2, 3) zu senden, wobei der Auftrag von einem Transportauftrag mit manuell am Smartgerät (7) ausgewählter Transportzielvorgabe gebildet ist, und die Datenverarbeitungseinrichtung des Flurförderzeugs (2, 3) dazu eingerichtet ist, die Auftragsdaten in ein Steuerungsprogramm einzulesen, das dafür programmiert ist, eine Abarbeitung des Auftrags durch das Flurförderzeug (2, 3) zu steuern.

## Claims

1. Method for operating an automated industrial truck (2, 3) with a control device comprising a data processing device for automatically controlling the industrial truck (2, 3), and a data exchange device operatively connected to the data processing device and comprising at least one data receiving device, **characterized in that** by means of at least one mobile electronic device with integrated data processing, data transmitting and data receiving device and also information output and input device, said electronic device being portable for carrying by an operator (6) and being defined as a smart device (7), order data for at least one order for the industrial truck (2, 3) are transmitted via a wireless data connection to the data receiving device of the industrial truck (2, 3), wherein the order is formed by a transport order with transport destination stipulation selected manually on the smart device (7), and the order data are forwarded to the data processing device, in which the order data are read into a control program that controls processing of the order by the industrial truck (2, 3).

2. Method according to Claim 1, **characterized in that** the smart device (7) exchanges data with a central data processing device of a goods management system and/or of a warehouse management system via a wireless data connection.

3. Method according to Claim 1 or 2, **characterized in that** a radio-based data transfer, in particular a WLAN, Bluetooth, NFC, UWB, DECT or LoRaWAN connection, is used as the wireless data connection.

4. Method according to Claim 3, **characterized in that** the radio-based data transfer is carried out via a network connection, in particular an Internet connection.

5. Method according to any of Claims 1 to 4, **characterized in that** orders for the industrial truck (2, 3) are selectable by means of a selection menu of the smart device (7).

6. Method according to Claim 5, **characterized in that** a selection of orders is stored in the data processing device of the control device of the industrial truck (2, 3) and/or in the smart device (7).

7. Method according to any of Claims 1 to 6, **characterized in that** the data exchange device of the industrial truck (2, 3) comprises a data transmitting device, via which the orders stored and/or processed in the data processing device of the control device of the industrial truck (2, 3) are able to be requested by means of the smart device (7) .

8. Intralogistics system for carrying out the method according to any of Claims 1 to 7 with at least one automated industrial truck (2, 3) with a control device comprising a data processing device for automatically controlling the industrial truck, and a data exchange device operatively connected to the data processing device and comprising at least one data receiving device, and with at least one mobile electronic device with integrated data processing, data transmitting and data receiving device and also information output and input device, said electronic device being portable for carrying by an operator and being defined as a smart device (7), **characterized in that** the smart device (7) is configured to transmit order data for at least one order for the industrial truck (2, 3) via a wireless data connection to the data receiving device of the industrial truck (2, 3), wherein the order is formed by a transport order with transport destination stipulation selected manually on the smart device (7), and the data processing device of the industrial truck (2, 3) is configured to read the order data into a control program that is programmed to control processing of the order by the industrial truck (2, 3).

## Revendications

1. Procédé de fonctionnement d'un convoyeur au sol automatisé (2, 3) comprenant un dispositif de commande, pourvu d'un dispositif de traitement de données et destiné à commander automatiquement le convoyeur au sol (2, 3), et un dispositif d'échange de données qui est relié fonctionnellement au dispositif de traitement de données et qui comprend au moins un dispositif de réception de données, **caractérisé en ce qu'**au moins un appareil électronique mobile, défini comme un appareil intelligent (7), qui peut être porté par un opérateur (6) et qui comprend un dispositif intégré de traitement de données, d'émission des données et de réception de données ainsi qu'un dispositif de sortie et d'entrée d'informations, est prévu pour envoyer des données d'ordre destinées à au moins un ordre du convoyeur au sol (2, 3) par le biais d'une liaison de données sans fil au dispositif de réception de données du convoyeur au sol (2, 3), l'ordre étant formée par un ordre de transport pourvu d'une consigne de destination de transport sélectionnée manuellement sur l'appareil intelligent (7), et les données d'ordre étant transmises au dispositif de traitement de données dans lequel les données d'ordre sont lues dans un programme de commande qui commande une prise en charge de l'ordre par le convoyeur au sol (2, 3).

2. Procédé selon la revendication 1, **caractérisé en ce que** l'appareil intelligent (7) échange des données avec un dispositif central de traitement de données d'un système de gestion de marchandises et/ou d'un système de gestion d'entrepôt par le biais d'une liaison de données sans fil.

3. Procédé selon la revendication 1 ou 2, **caractérisé en ce qu'**une transmission de données radio, en particulier une liaison WLAN, Bluetooth, NFC, UWB, DECT ou LoRaWAN, est utilisée comme liaison de données sans fil.

4. Procédé selon la revendication 3, **caractérisé en ce que** la transmission de données radio est réalisée par le biais d'un réseau, notamment d'une liaison Internet.

5. Procédé selon l'une des revendications 1 à 4, **caractérisé en ce que** des ordres du convoyeur au sol (2, 3) peuvent être sélectionnés à l'aide d'un menu de sélection de l'appareil intelligent (7).

6. Procédé selon la revendication 5, **caractérisé en ce qu'**une sélection d'ordres est stockée dans le dispositif de traitement de données du dispositif de commande du convoyeur au sol (2, 3) et/ou dans l'appareil intelligent (7).

7. Procédé selon l'une des revendications 1 à 6, **caractérisé en ce que** le dispositif d'échange de données du convoyeur au sol (2, 3) comprend un dispositif d'émission de données via qui permet d'interroger au moyen de l'appareil intelligent (7) les ordres stockés et/ou traités dans le dispositif de traitement de données du dispositif de commande du convoyeur au sol (2, 3).

8. Système intralogistique destiné à mettre en œuvre le procédé selon l'une des revendications 1 à 7, à l'aide d'un convoyeur au sol automatisé (2, 3) comprenant un dispositif de commande, pourvu d'un dispositif de traitement de données et destiné à commander automatiquement le convoyeur au sol, et un dispositif d'échange de données qui est relié fonctionnellement au dispositif de traitement de données et qui comprend au moins un dispositif de réception de données, et au moins un appareil électronique mobile, défini comme un appareil intelligent (7), qui peut être porté par un opérateur et qui comprend un dispositif intégré de traitement de données, d'émission de données et de réception de données ainsi qu'un dispositif de sortie et d'entrée d'informations, **caractérisé en ce que** l'appareil intelligent (7) est conçu pour envoyer des données d'ordre destinées à au moins un ordre du convoyeur au sol (2, 3) par le biais d'une liaison de données sans fil au dispositif de réception de données du convoyeur au sol (2, 3), l'ordre étant formée par un ordre de transport pourvu d'une consigne de destination de transport sélectionnée manuellement sur l'appareil intelligent (7), et le dispositif de traitement de données du convoyeur au sol (2, 3) étant conçu pour lire les données d'ordre dans un programme de commande qui est programmé pour commander une prise en charge de l'ordre par le convoyeur au sol (2, 3).
